# EUROPÄISCHE PATENTSCHRIFT

(11) **EP 1 127 526 B1**
(45) Veröffentlichungstag und Bekanntmachung des Hinweises auf die Patenterteilung: **21.08.2002**
(21) Anmeldenummer: 00127777.1
(22) Anmeldetag: 19.12.2000
(51) Int. Cl.: A47J 43/07

(54) **Vorrichtung zum Zerkleinern von Lebensmitteln**
A food cutter device
Robot de cuisine pour la préparation alimentaire

(30) Priorität: 15.01.2000 DE 10001455
(43) Veröffentlichungstag der Anmeldung: 29.08.2001
(60) Teilanmeldung: 02010008.7
(73) Patentinhaber: Braun GmbH, 61476 Kronberg (DE)
(72) Erfinder: Rebordosa, Antonio, 08272 Sant Fruitòs de Bages (Barcelona) (ES); Penaranda, Mariano, 08005 Barcelona (ES); Coronado, Juan Carlos, 08042 Barcelona (ES); Roman José Luis, 08960 Sant Just Desvern (Barcelona) (ES)

(56) Entgegenhaltungen:
- DE-A- 19 737 130
- FR-A- 1 143 914
- US-A- 4 605 173
- US-A- 4 759 507
- US-A- 5 765 767

## Beschreibung

Die Erfindung betrifft eine Vorrichtung zum Zerkleinem von Lebensmitteln, insbesondere Eiswürfel, gemäß dem Oberbegriff des Patentanspruchs 1 wie in US-A-4,605,173 beschrieben.

Aus dem Stand der Technik sind eine Vielzahl von Vorrichtungen zum Zerkleinern von Lebensmitteln bekannt. So beschreiben die EP-A-0 211 392 und die US-A-5,360,170 ein Zusatzgerät für eine elektrische Küchenmaschine, bei denen ein Zerkleinerungswerkzeug am Boden eines zylindrischen Behälters frei drehbar gelagert ist. Dabei erfolgt das Zerkleinern der Lebensmittel, wie Obst, Gemüse, Eiswürfel o.ä., dadurch, daß die Schneiden des Zerkleinerungswerkzeuges ein Teil der Lebensmittel bei jeder Umdrehung durchtrennen. Aufgrund der bodennahen Anordnung des Zerkleinerungswerkzeuges werden diejenigen Lebensmittel, die im unteren Behälterbereich zum Liegen gekommen sind, häufiger zerkleinert als andere, die im oberen Behälterbereich zum Liegen gekommen sind, wenn die Nahrungsmittel nicht optimal durchgemischt werden.

In der EP-A-0 174 407 wird eine Vorrichtung, insbesondere zum Zerkleinern von Eiswürfeln, der eingangs erwähnten Art beschrieben, bei der ein oberer Behälter mit einem die Nahrungsmittel zerkleinernden Bearbeitungsbereich und mit einem anschließenden, die Nahrungsmittel aufnehmenden Sammelbereich vorgesehen ist. Die unbearbeiteten Eiswürfel befinden sich in einem Drehzylinder des Bearbeitungsbereichs, der von einem mit einer Kurbel und einer Druckplatte versehenen tassenförmigen Gehäuse eingeschlossen ist. Das Gehäuse bildet mit einem Rand den eigentlichen Deckel, der seinerseits den die zerkleinerten Nahrungsmittel aufnehmenden Behälter verschließt. Durch die auf den Eiswürfeln aufliegende Druckplatte wird Druck auf die Eiswürfel ausgeübt. Dadurch, daß die Druckplatte drehfest aber axial verschiebbar mit dem Drehzylinder verbunden ist, wird dieser bei Drehung der Kurbel in Drehung versetzt. Am Deckelboden ist in radialer Richtung eine Klinge, quasi wie ein Hobel, angeordnet. Durch die Drehbewegung und den Druck, der von der Druckplatte ausgeübt wird, werden im Betrieb der Vorrichtung die Eiswürfel "kleingehobelt". Die Eisspäne fallen dann in den unten liegenden Sammelbereich des Behälters.

Bei dieser Vorrichtung muß neben der Drehbewegung von oben her noch zusätzlich ein vertikaler Druck über die Druckplatte auf die Eiswürfel gegeben werden, was eine entsprechend aufwendige Lagerung erfordert. Außerdem ist die Scheibengröße der Eisstücke durch den Hobelspalt festgelegt und nur in sehr geringem Maße variabel. Die zerkleinerten Eisstücke bestehen vorzugsweise aus scheibenförmigen, dünnen Abschnitten, die einen eher musähnlichen Charakter haben. Zum Schneiden von Eis ist ein verhältnismäßig großer Kraftaufwand erforderlich. Zum anderen läßt sich Eis eigentlich schlecht schneiden, da es bei geringen Drehbewegungen leicht vom Messer abgleiten kann.

Der vorliegenden Erfindung liegt die Aufgabe zugrunde, die Nachteile des beschriebenen Standes der Technik zu vermeiden und eine verbesserte Lösung einer Vorrichtung zum Zerkleinern von Nahrungsmitteln, insbesondere Einsstücke, rohes, festes Gemüse, trockene Früchte, etc., zur Verfügung zu stellen, die auch als Anbaugerät an vorhandene, elektromotorisch angetriebene Küchenmaschinen zum Zweck der Energieaufnahme geeignet ist und durch die Nahrungsmittel, insbesondere Eisstücke auf einfache Weise derart zerkleinert werden können, daß diese eine bestimmte Größe nicht überschreiten und auch nicht zu klein sind.

Diese Aufgabe wird durch eine Vorrichtung mit den Merkmalen des Patentanspruchs 1 gelöst. Vorteilhafte Ausgestaltungen der Erfindung werden in den Unteransprüchen beschrieben. Die erfindungsgemäße Vorrichtung hat den Vorteil, daß zum einen Lebensmittel, wie ein Eiswürfel, Nüsse, Gemüsesalate, etc., sobald sie eine bestimmte Größe erreicht haben, zerkleinert werden müssen. Dies spart Energie und führt zu verhältnismäßig gleicher Größe von zerkleinerten Nahrungsmittelteilen. Zum anderen wird dadurch erreicht, daß neben trokkenen Früchten, rohem aber festem Gemüse auch Eiswürfel zerkleinert werden können, ohne daß in größerem Maße Energie vom Zerkleinerungswerkzeug absorbiert wird und die zerkleinerten Teile zu schmelzen beginnen. Die erfindungsgemäße Ausführungsform mit den Merkmalen des Patentanspruchs 1 kann dabei beispielsweise ein Edelstahlsieb, ein Kunststoffsieb oder ein Drahtsieb aufweisen. Dabei kann das Sieb beispielsweise zylindrisch, kegelförmig oder halbkugelförmig ausgebildet sein. Durch die entsprechende Auswahl der Durchlaßöffnungen des Siebs kann die Größe der Lebensmittelteile bestimmt werden, die nach ihrer Zerkleinerung vom Bearbeitungsbereich in den Sammelbereich gelangen können.

Der Bearbeitungsbereich und der Sammelbereich sind dabei vorzugsweise vertikal übereinander in dem beispielsweise als Zylinder, Kegelstumpf oder sonst eine Hohlform annehmenden Behälterkörper angeordnet. Durch die Anordnung des Bearbeitungsbereiches oberhalb des Sammelbereiches wird erreicht, daß die zerkleinerten Lebensmittelteile aufgrund ihrer Schwerkraft letztendlich von oben nach unten fallen können und daß die unbearbeiteten Lebensmittel im Bearbeitungsbereich von oben nach unten zum Arbeitswerkzeug bewegt werden, wo sie zerkleinert werden. Bei der zur Zerkleinerung der Nahrungsmittel erforderlichen Bewegung sorgt erfindungsgemäß das rotierende Arbeitswerkzeug, das die Nahrungsmittel nicht nur aufgrund seiner hohen Umdrehungsgeschwindigkeit zerkleinert bzw. zerschlägt und/oder zerschneidet, sondern auch die Nahrungsmittel durch die Öffnungen treibt bzw. schleudert, wenn sie klein genug geworden sind. Durch die Anordnung des Lagerstifts am Siebboden wird eine Lagerung der Werkzeugspindel allein an der Zerkleinerungsvorrichtung erreicht. Die Lagerung erfolgt dabei beispielsweise in Form eines Gleitlagers, d.h. an der Werkzeugspindel ist eine Weichmetallbuchse, beispielsweise aus Messing, angebracht, in die ein Lagerstift hineinragt. Der Lagerstift ist dabei beispielsweise am Boden des Siebs befestigt. Der Siebboden dient dabei gleichzeitig als Lauffläche für die Weichmetall-Lagerbuchse. Diese Anordnung ist einfach und kostengünstig herstellbar.

Dabei ist es besonders vorteilhaft, wenn das Sieb mit den Merkmalen des Patentanspruchs 2 ausgestaltet ist. Hierdurch können die Nahrungsmittel entweder durch die Öffnungen am Boden, durch die Öffnungen in der Seitenwand oder durch beide Siebbereiche transportiert werden, wenn Öffnungen dort ausgebildet sind. Bei seitlich angeordneten Öffnungen (Anspruch 3) und der verhältnismäßig hohen Drehzahl des Arbeitswerkzeuges, werden die zerkleinerten Nahrungsmittel gegen die Öffnungen mit hohen Zentrifugalkraft geschleudert und durch die Öffnungen gepreßt. Hohe Drehzahlen können insbesondere bei elektromotorisch angetriebenen Vorrichtungen erreicht werden. Hierdurch verbleiben im Bearbeitungsbereich nur diejenigen Nahrungsmittel, die noch nicht die Größe der Öffnungen im Sieb erreicht haben.

Besonders vorteilhaft ist eine zügige Bearbeitung der Nahrungsmittel bei einer Ausführungsform gelöst, bei der das Zerkleinerungswerkzeug über seinen vollen Umfang von einer schräg abfallenden Siebwand umgeben ist. Die Siebwand kann dabei auch kegelstumpfförmig ausgebildet sein.

Eine weitere vorteilhafte Ausführungsform der vorliegenden Erfindung weisen die Merkmale des Patentanspruchs 4 auf. Hierdurch ist die Zerkleinerungsvorrichtung für unterschiedliche Lebensmittel und verschiedene Zerkleinerungsgrößen vielseitig anwendbar. Auf diese Weise können beispielsweise grob gehackte Gemüsesalate und feine Fruchtcremes erzeugt werden. Die variable Durchlässigkeit kann dabei durch gegeneinander verdrehbare Siebe mit entsprechenden kongruenten Querschlitzen erfolgen, welche durch das Verdrehen entsprechend mehr oder weniger geöffnet werden.

Eine vorteilhafte Weiterbildung der vorliegenden Erfindung weisen die Merkmale des Patentanspruchs 5 auf. Eine derartige Ausgestaltung ist besonders hygienisch, da auch der Siebhalter aus dem Behälterkörper entnommen und gereinigt werden kann. Außerdem ist durch das Vorsehen unterschiedlicher Siebhalter eine einfache Anpassung der vorliegenden Erfindung an unterschiedliche Küchenmaschinen und unterschiedliche Zerkleinerungswerkzeuge möglich. Der Siebhalter kann dabei entweder aus Metall oder aus Kunststoff hergestellt sein. Er weist an seinem unteren Ende einen nach innen hervorstehenden Rand oder Bundsteg auf, in den ein umlaufender Halterand des Siebs bzw. hervorstehende Haltenasen des Siebs gehalten werden.

Weiterhin sieht eine vorteilhafte Ausführungsform der vorliegenden Erfindung eine Ausgestaltung mit den Merkmalen des Patentanspruchs 6 vor. Dabei wirken die vertikalen, parallel zur Behältermittelachse verlaufenden Stege mit korrespondierenden Aussparungen an der Wandung des Siebhalters zusammen. Die Stege erfüllen hier eine Doppelfunktion. Zum einen dienen sie als Führung für den Siebhalter, zum anderen stellen sie einen oberen Anschlag für den Siebhalter und damit eine vertikale Positionierung desselben dar. Der Siebhalter ist hierdurch in seiner vertikalen Position fixiert, d.h. gelagert und ist gleichzeitig gegen Verdrehen, beispielsweise durch die aufgrund der Drehbewegung des Zerkleinerungswerkzeuges rotierenden Lebensmittelteile, gesichert.

Das Zerkleinerungswerkzeug ist dabei vorteilhafterweise gemäß den Merkmalen des Patentanspruchs 7 ausgestaltet. Neben Klingen kann aber auch eine andere geeignete Ausgestaltung Anwendung finden. Insbesondere bei vier Schneiden wird eine Drehung frei von Unwucht und eine sehr effektive Zerkleinerungsarbeit an den Nahrungsmitteln erreicht.

Die Klingen sind beispielsweise gemäß den Merkmalen des Patentanspruchs 8 unterschiedlich ausgebildet. Hierdurch wird ein sogenanntes Aufschwimmen des Zerkleinerungswerkzeuges bei seiner Drehbewegung aufgrund der zu verdrängenden Lebensmittelstücke verhindert.

Besonders vorteilhaft ist es, wenn die vorliegende Erfindung mit den Merkmalen des Patentanspruchs 9 ausgestaltet ist, da hierdurch kein eigener Antrieb für die Vorrichtung erforderlich ist, sondern der Antrieb einer ohnehin im Haushalt benötigten Küchenmaschine ausgenutzt werden kann.

Schließlich ist es vorteilhaft, wenn das Sieb austauschbar ist, da hierdurch gröbere, feinere oder verstellbare Siebe zur Anwendung kommen können (Anspruch 10).

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine vorteilhafte Ausführungsform der vorliegenden Erfindung in einer perspektivische Explosionsdarstellung;
- Fig. 2: die Vorrichtung gemäß Fig. 1 in einem Längsschnitt;
- Fig. 3: eine schematische Funktionsdarstellung der Vorrichtung gemäß Fig. 1 und 2 in einem Längsschnitt;
- Fig. 4: eine Detailansicht des erfindungsgemäßen Siebs und des Siebhalters gemäß dem Ausführungsbeispiel nach Fig. 1 in einer perspektivische Darstellung;
- Fig. 5: eine perspektivische Darstellung eines alternativen Siebs;
- Fig. 6: ein weiteres alternatives verstellbares Sieb sowie ein Siebhalter in perspektivischer Explosionsdarstellung;
- Fig. 7: eine Draufsicht auf ein verstellbares Sieb gemäß Fig. 6.

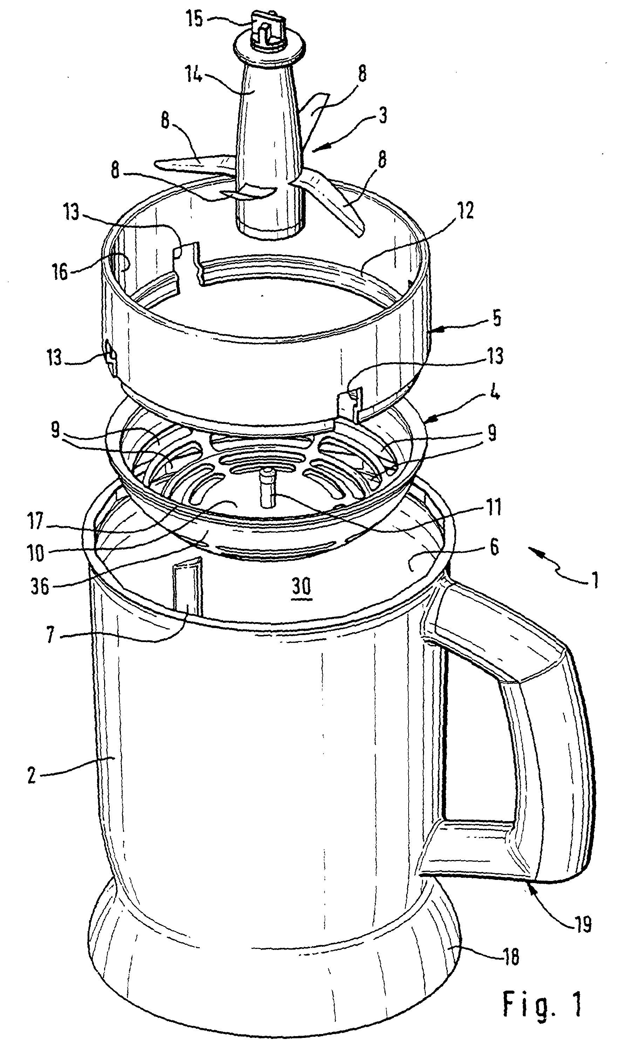

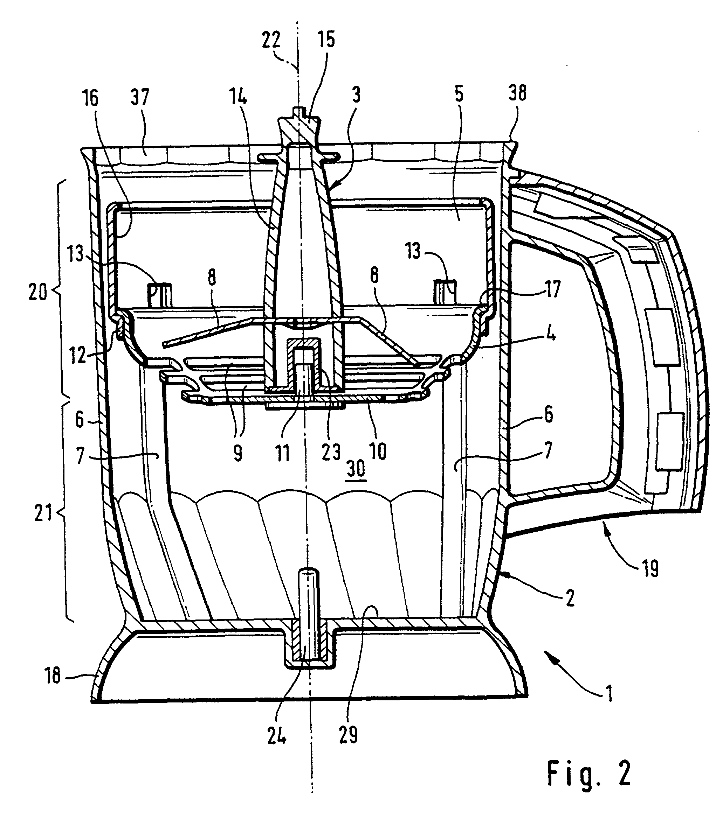

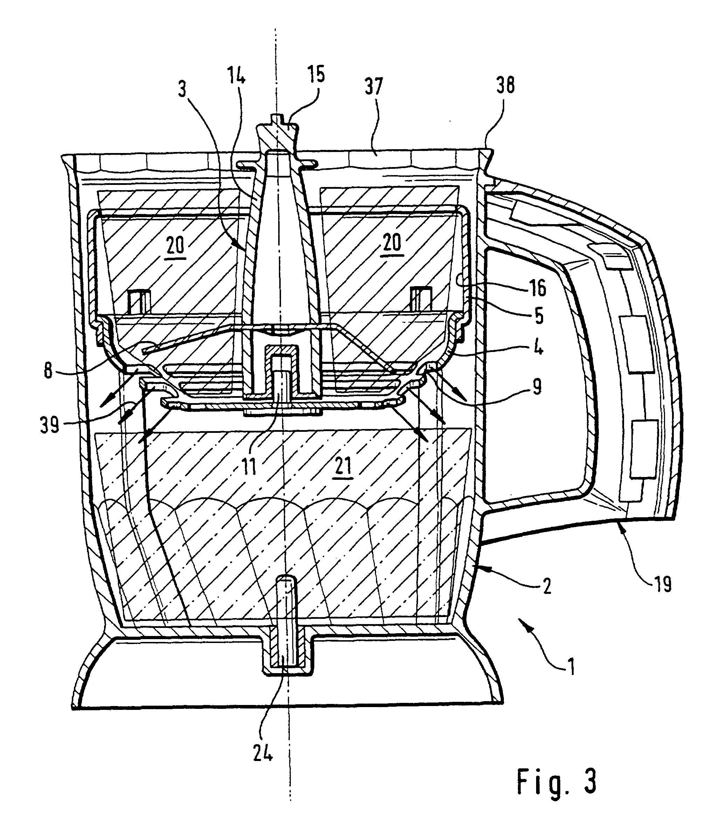

Figuren 1 bis 3 zeigen eine vorteilhafte Ausführungsform einer Zerkleinerungsvorrichtung 1 gemäß der vorliegenden Erfindung. Diese ist in Fig. 1 als Explosionszeichnung schematisch dargestellt. Figuren 2 und 3 zeigen die Zerkleinerungsvorrichtung 1 im Schnitt. Im folgenden sind gleiche oder ähnliche Bauteile mit gleichen Bezugszeichen versehen.

Die Zerkleinerungsvorrichtung 1 weist einen im wesentlichen zylindrischen Behälterkörper 2 auf, der an seinem unteren Ende einen Behälterboden 29 hat. Der Behälterkörper 2 steht auf einem Behälterfuß 18, der einstückig mit dem Behälterkörper 2 verbunden ist. Der Behälterfuß 18 ist dabei als Kegelstumpf ausgebildet, dessen Umfang sich nach unten hin erweitert. Außerdem ist mit dem aus einem geeigneten Kunststoffmaterial hergestellten Behälterkörper 2 seitlich ein Griff 19 einstückig mit der Behälterwand 6 verbunden. Dabei ist der Griff 19 aus Gründen der Gewichtsersparnis als U-förmiger Hohlkörper ausgebildet.

Im Behälterinnenraum 30 sind über den Umfang verteilt vier um 90° versetzte Stege 7 angeordnet. Die Stege 7 sind einstückig mit der Behälterwand 6 verbunden und verlaufen parallel zur Mittelachse 22 des Behälterkörpers 2. Dabei verlaufen die Stege 7 nicht über die gesamte Höhe des Behälterkörpers 2 sondern enden auf etwa 2/3 der Höhe des Behälterkörpers 2.

Weiter weist die Zerkleinerungsvorrichtung 1 ein Zerkleinerungswerkzeug 3 auf, das im wesentlichen aus einer Werkzeugspindel 14 und damit verbundenen Klingen 8 gebildet ist. Die Werkzeugspindel 14 ist dabei ein leicht konisches hohles Drehteil aus Metall, das an seinem unteren breiten Ende offen ist. Am oberen Ende der Werkzeugspindel 14 ist eine Verzahnung 15 vorhanden, die als Kupplung für die Kraftübertragung von einer Antriebseinheit auf die Zerkleinerungsvorrichtung 1 dient. Das untere Ende der Werkzeugspindel 14 wird durch eine Stiftaufnahme 23 aus Weichmetall verschlossen.

Ferner sind am Außenumfang der Werkzeugspindel 14 in deren unterem Drittel um 90° versetzt vier Klingen 8 angebracht. Die Klingen 8 sind dabei auch in der Höhe versetzt angeordnet und in unterschiedlichen Winkeln abgewinkelt, so daß die von ihnen auf die Nahrungsmittel ausgeübte Kraft auch in Richtung der Öffnungen 9, 31, 35 gerichtet ist, um möglichst schnell die zerkleinerten Nahrungsmittel die Öffnungen 9, 31, 35 passieren zu lassen, sobald sie die Durchlaßbreite der Öffnungen 9, 31, 35 erreicht haben. Hierdurch wird eine zu starke Zerkleinerung der Nahrungsmittel und bei Eis zusätzlich noch zu schnelles Auftauen vermieden.

Das Zerkleinerungswerkzeug 3 ist im zusammengebauten Zustand im Bearbeitungsbereich 20, d.h. in der oberen Hälfte des Behälterkörpers 2 angeordnet. In diesem Bearbeitungsbereich 20 sind konzentrisch mit der Mittellinie 22 das Zerkleinerungswerkzeug 3, ein Sieb 4 und ein Siebhalter 5 angeordnet. Die untere Hälfte des Behälterkörpers 2 dient als Sammelbereich 21 für die im Bearbeitungsbereich 20 zerkleinerten Lebensmittel.

Das Sieb 4 ist dabei kegelstumpfförmig ausgebildet, wobei die Seitenwände 36, welche das Zerkleinerungswerkzeug 3 umgeben, längliche horizontal und parallel zueinander verlaufende Schlitze 9 aufweisen. An der schmaleren Unterseite ist ein Siebboden 10 vorhanden, der in seiner Mitte einen senkrecht nach oben hervorstehenden Lagerstift 11 aufweist. Das breitere obere Ende des Siebes 4 weist einen offenen Querschnitt auf. Das Sieb 4 schließt mit einem umlaufenden, als Wulst nach außen hervorstehenden Halterand 17 ab, über den das Sieb 4 mit einem Bundsteg 12 am unteren Ende des Siebhalters 5 verbunden ist.

Der Siebhalter 5 ist als kreisförmiger Ring ausgebildet, der eine an seinem unteren Umfang vier um 90° versetzt angeordnete Aussparungen 13 aufweist. Außerdem schließt der Siebhalter 5 an seiner unteren Siebhalterinnenwand 16 mit einem nach innen hervorstehenden Wulst oder Bundsteg 12 ab.

Beim Zusammenbau wird das Sieb 4 von oben in den Siebhalter 5 hineingeführt, bis der Halterand 17 auf dem Bundsteg 12 aufsitzt. Dann wird das Sieb 4 zusammen mit dem Siebhalter 5 in den Behälterkörper 2 eingeführt, und zwar so, daß die Aussparungen 13 am Siebhalter 5 die oberen Enden der Stege 7 umfassen und von diesen geführt werden. Der Siebhalter 5 sitzt schließlich auf den oberen Enden der Stege 7 auf. Dann wird das Zerkleinerungswerkzeug 3 von oben eingebaut, so daß der Lagerstift 11, der vom Siebboden 10 senkrecht hervorsteht, in die Stiftaufnahme eingeführt wird. Die als Weichmetallbuchse ausgeführte Stiftaufnahme 23 und der Lagerstift 11 ergeben dadurch eine Art Gleitlager für die Werkzeugspindel 14.

Nach dem Befüllen des Bearbeitungsbereichs 20 wird die Zerkleinerungsvorrichtung 1 mit einem nicht gezeigten Deckel abgedeckt und über die Verzahnung 15 mit einem Antrieb einer Küchenmaschine verbunden. Der Deckel verschließt dabei die Öffnung des Behälterkörpers und sitzt an dessen Rand auf. Der Deckel kann dabei Bestandteil eines mit einem Getriebe versehenen Gehäuses (nicht dargestellt) sein, so wie dies beispielsweise bei dem Extra-Zerkleinerer für den Braun MultiMix quatro pro M880M der Fall ist, der beispielsweise in der von der Anmelderin dargestellten Programmübersicht "Qualität in guter Form", Ausgabe 1999/2000, auf Seite 18 gezeigt ist.

Der Zapfen 24, der nach Figuren 2 und 3 im Behälterboden 29 vorgesehen ist, dient als Zentrierung und Lagerung eines anderen Werkzeugs, wenn der Behälterkörper 2 als Mixgerät benutzt wird. Er hat also bei der Vorrichtung keine Funktion.

Beim Einschalten der Küchenmaschine beginnt sich nun die Werkzeugspindel 14 und damit das Zerkleinerungswerkzeug 3 um die Mittellinie 22 zu drehen. Dadurch werden die im Bearbeitungsbereich 20 angeordneten Lebensmittel von den rotierenden Klingen 8 zerteilt und im Bearbeitungsbereich herumgeschleudert. Sobald die zerteilten Lebensmittel eine Stückgröße erreichen, die kleiner als die im Sieb 4 vorgesehenen Schlitze 9 sind, gelangen die Lebensmittelteile, wie in Fig. 3 durch Pfeile 39 angedeutet, in den Sammelbereich 21 des Behälterkörpers 2. Dadurch rücken andere im Bearbeitungsbereich 20 angeordnete und bereits teilweise zerteilte Lebensmittel nach, werden weiter zerkleinert und gelangen dann schließlich auch in den Sammelbereich 21. Durch die spezielle Ausbildung der Klingen 8 werden die Nahrungsmittel mit hoher Geschwindigkeit und Kraft in dem Bearbeitungsbereich 20 herumgeschleudert und, sobald sie die richtige Größe erreicht haben, durch die Öffnungen 9, 31, 35 gedrückt bzw. geschleudert.

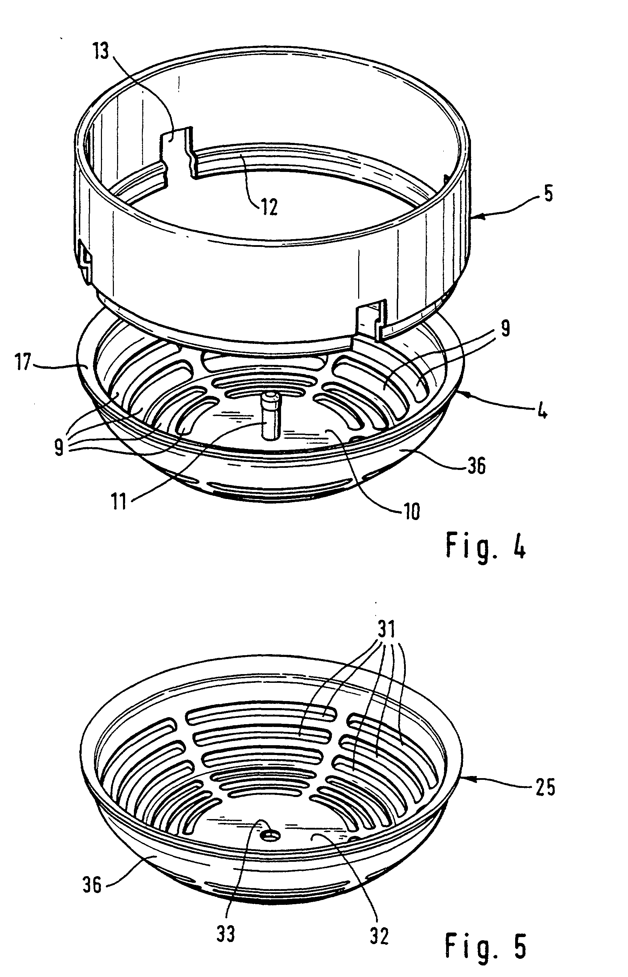

Fig. 4 zeigt das Sieb 4 und den Siebhalter 5 nochmals als perspektivisches Detail. Zu beachten ist dabei, daß das Sieb 4 bei der Montage von oben durch die zylinderförmige Öffnung des Siebhalters 5 eingeführt wird, da der breitere Halterand 17 so auf dem Bundsteg 12 zum Liegen kommen kann. Ferner sind deutlich die Schlitze 9 zu erkennen, die in unterschiedlicher Entfernung von der Mittelachse 22 in Umfangsrichtung verlaufen. Vom Siebboden 10 steht senkrecht der Lagerstift 11 hervor, der zur Lagerung des Zerkleinerungswerkzeuges 3 bzw. der Werkzeugspindel 14 dient. Am Umfang des Siebhalters 5 sind femer die Aussparungen 13 zu erkennen, die als Auflager des Siebhalters 5 auf den am Innenumfang des Behälterkörpers 2 angebrachten Stegen 7 dienen.

Fig. 5 zeigt eine weitere Ausführungsform, nämlich ein Feinsieb 25, bei dem die Schlitzbreite der Schlitze 31 geringer ist als die der in den vorherigen Figuren gezeigten Schlitze 9. Am Siebboden 32 ist eine Bohrung 33 gezeigt, in der ein entsprechender Lagerstift für eine Werkzeugspindel verankert werden kann.

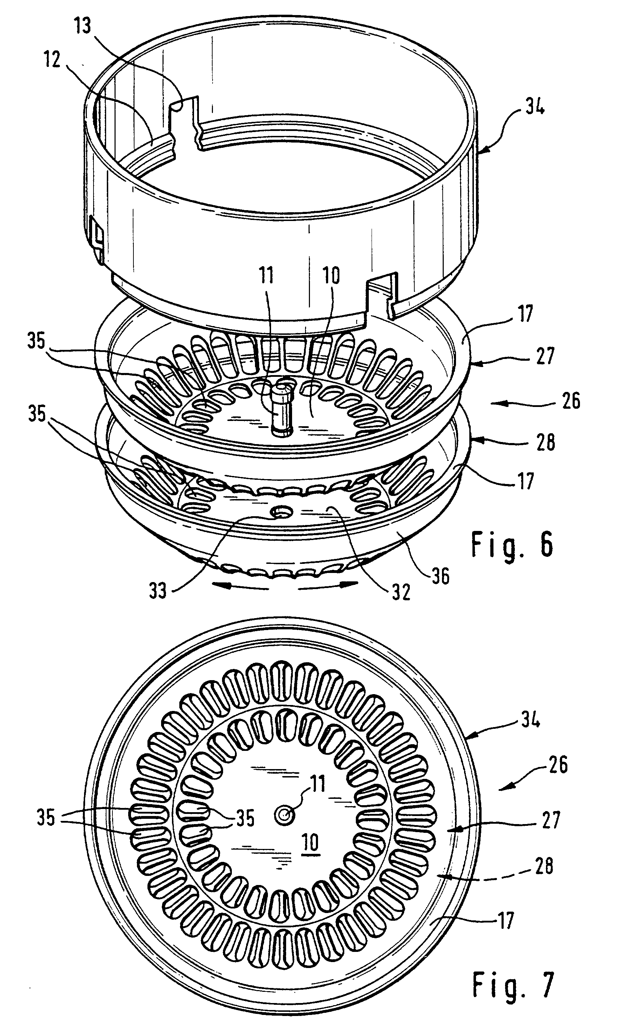

Fig. 6 zeigt eine andere alternative Ausführungsform eines vorteilhaften Siebs, nämlich ein Verstellsieb 26. Neben dem kegelstumpfförmigen Verstellsieb 26 ist ein kreisringförmiger Siebhalter 34 dargestellt. Das Vestellsieb 26 ist dabei aus einem Innensieb 27 und einem Außensieb 28 aufgebaut, die jeweils ähnlich dem Sieb 4 bzw. 25 aus den Figuren 4 und 5 ausgestaltet sind. Im Gegensatz zu diesen Sieben weisen das Innensieb 27 und das Außensieb 28 jedoch Querschlitze 35 auf, die sich in radialer Richtung erstrecken. Ferner weist das Innensieb 27 im Zentrum seines kreisförmigen Siebbodens 10 einen senkrecht hervorstehenden Lagerstift 11 auf. Dieser Lagerstift 11 weist an seinem unteren Ende eine nicht dargestellte Verankerung auf, die von einer Bohrung 33 im Siebboden 32 des Außensiebs 28 aufgenommen wird. Hierdurch bildet der Lagerstift 11 nicht nur ein Bestandteil des Gleitlagers für den Werkzeugschaft sondern bildet gleichzeitig die Drehachse zum Verdrehen des Innensiebs 27 gegen das Außensieb 28.

Bei der Montage wird das Innensieb 27 vom Außensieb aufgenommen und zwar so, daß es sich verdrehen läßt. Das Außensieb 28 wird wiederum in der Siebhalterung 34 aufgenommen, die dem Siebhalter 5 entspricht und wie dieser über den Umfang verteilte Aussparungen 13 aufweist. Ferner weist der Siebhalter 34 an seinem inneren unteren Rand einen Bundsteg 12 auf. Das Innensieb 27 läßt sich nach der Montage in Umfangsrichtung gegen das Außensieb 28 verdrehen, wie durch die Pfeile in Fig. 6 angedeutet ist. Dadurch werden die korrespondierenden Querschlitze 35 gegeneinander verschoben. Auf diese Weise wird die Schlitzbreite variiert, d.h. die Durchlässigkeit des Verstellsiebs 26 nimmt entsprechend zu oder ab.

Das Verstellsieb 26 ist in Fig. 7 in einer Draufsicht dargestellt. Dabei sind die Querschlitze 35 leicht verdeckt, d.h. das Innensieb 27 ist gegenüber dem Außensieb 28 so verdreht, daß diese nicht kongruent übereinander liegen.

## Patentansprüche

1. Vorrichtung zum Zerkleinern von Lebensmitteln, insbesondere Eisstücke, wobei die Vorrichtung einen Behälterkörper (2) aufweist, der in einen oberen Bearbeitungsbereich (20) und einen unteren Sammelbereich (21) unterteilt ist und wobei im Bearbeitungsbereich (20) ein Zerkleinerungswerkzeug (3) ausgebildet ist, das die Nahrungsmittel zerkleinert, wobei
das Zerkleinerungswerkzeug (3) von einem rotierenden Messer gebildet wird und am Übergang vom Bearbeitungsbereich (20) zum Sammelbereich (21) zumindest teilweise ein Sieb (4; 25; 26) ausgebildet ist, welches den Bearbeitungsbereich (20) vom Sammelbereich (21) trennt **dadurch gekennzeichnet, daß** das Zerkleinerungswerkzeug (3) eine Werkzeugspindel (14) aufweist, die an ihrem unteren Ende an einem Lagerstift (11) auf dem Siebboden (10; 32) drehbar gelagert ist.

2. Vorrichtung nach Anspruch 1,
**dadurch gekennzeichnet,**
**daß** das Sieb (4; 25; 26) topfförmig ausgebildet ist, dessen Öffnungen (9; 31; 35) am Boden (10) und/oder an dessen Seitenwand (36) ausgebildet sind.

3. Vorrichtung nach Anspruch 2,
**dadurch gekennzeichnet,**
**daß** das Zerkleinerungswerkzeug (3) in Höhe der an der Seitenwand ausgebildeten Öffnungen (9; 31; 35) ausgebildet ist.

4. Vorrichtung nach Anspruch 1,
**dadurch gekennzeichnet,**
**daß** das Sieb (26) derart verstellbar ausgebildet ist, daß unterschiedliche Durchlässigkeiten einstellbar sind.

5. Vorrichtung nach Anspruch 1,
**dadurch gekennzeichnet,**
**daß** ein Siebhalter (5; 34) vorgesehen ist, der das Sieb (4; 25; 26) an seinem unteren Ende aufnimmt.

6. Vorrichtung nach Anspruch 5,
**dadurch gekennzeichnet,**
**daß** auf der Innenseite der Behälterwand (6) Stege (7) hervorstehen, um Aussparungen (13) am Siebhalter (5; 34) aufzunehmen.

7. Vorrichtung nach Anspruch 1,
**dadurch gekennzeichnet,**
**daß** das Zerkleinerungswerkzeug (3) mehrere, vorzugsweise vier, Klingen (8) aufweist und daß die Klingen derart geformt sind, daß die beim Zerkleinern auf die Nahrungsmittel einwirkenden Kräfte in Richtung auf die Öffnungen (9; 31; 35) gerichtet sind.

8. Vorrichtung nach Anspruch 7,
**dadurch gekennzeichnet,**
**daß** die Klingen (8) jeweils unterschiedlich abgewinkelt über den Umfang der Werkzeugspindel (14) verteilt angeordnet sind.

9. Vorrichtung nach Anspruch 1,
**dadurch gekennzeichnet,**
**daß** am Zerkleinerungswerkzeug (3) eine Kupplung (15) vorgesehen ist, die mit dem Abtrieb einer elektrisch betriebenen Küchenmaschine verbindbar ist.

10. Vorrichtung nach Anspruch 1,
**dadurch gekennzeichnet,**
**daß** das Sieb (4; 25; 26) austauschbar ist.

## Claims

1. A device for chopping food, in particular pieces of ice, said device including a container body (2) divided into an upper processing zone (20) and a lower collecting zone (21), said processing zone (20) accommodating a chopping tool (3) for reducing the food, said chopping tool (3) being formed by a rotary blade, and in the transition region from the processing zone (20) to the collecting zone (21) there being at least partially a sieve (4; 25; 26) separating the processing zone (20) from the collecting zone (21), **characterized in that** the processing tool (3) comprises a tool spindle (14) having its lower end rotatably mounted on a bearing pin (11) provided on the sieve bottom (10; 32).

2. The device as claimed in claim 1,
**characterized in that** the sieve (4; 25; 26) is of a cup-shaped configuration having openings (9; 31; 35) formed in the bottom (10) and/or in its side wall (36).

3. The device as claimed in claim 2,
**characterized in that** the chopping tool (3) is arranged level with the openings (9; 31; 35) formed in the side wall.

4. The device as claimed in claim 1,
**characterized in that** the sieve (26) is adjustable such as to enable different throughput capacities to be adjusted.

5. The device as claimed in claim 1,
**characterized in that** provision is made for a sieve holder (5; 34) receiving the sieve (4; 25; 26) at its lower end.

6. The device as claimed in claim 5,
**characterized in that** projecting ribs (7) are provided on the inside of the container wall (6) for engagement with cutouts (13) provided on the sieve holder (5; 34).

7. The device as claimed in claim 1,
**characterized in that** the chopping tool (3) includes several, preferably four, blades (8), and that said blades are formed in such manner that the forces acting on the food materials during chopping are directed towards the openings (9; 31; 35).

8. The device as claimed in claim 7,
**characterized in that** the blades (8) are circumferentially spaced apart on the outer periphery of the tool spindle (14), each blade being bent at a different angle.

9. The device as claimed in claim 1,
**characterized in that** a coupling device (15) is provided on the chopping tool (3), which is adapted to be connected with the output of an electrically operated kitchen appliance.

10. The device as claimed in claim 1,
**characterized in that** the sieve (4; 25; 26) is interchangeable.

## Revendications

1. Dispositif pour découper en morceaux des denrées alimentaires, notamment des morceaux d'oeufs, dans lequel le dispositif comportant un corps de récipient (2), qui est divisé en une zone supérieure de traitement (20) et une zone inférieure de collecte (21), et dans lequel un outil (3) de division en morceaux, qui découpe en morceaux la denrée alimentaire, est formé dans la zone de traitement (20), et dans lequel l'outil (3) de découpage en morceaux est formé par un couteau rotatif et, au niveau de la jonction entre la zone de traitement (20) et la zone de collecte (21) est disposé au moins partiellement un tamis (4;25;26), qui sépare la zone de traitement (20) de la zone de collecte (21), **caractérisé en ce que** l'outil (3) de division en morceaux comporte une broche porte-outil (24), qui, au niveau de son extrémité inférieure, est montée de manière à pouvoir tourner sur une tige de support (11) sur le fond du tamis (18;32).

2. Dispositif selon la revendication 1, **caractérisé en ce que** le tamis (4;25;26) est agencé en forme de pot, dont les ouvertures (9;31;35) sont formées dans le fond (10) et/ou dans la paroi latérale (36) du pot.

3. Dispositif selon la revendication 2, **caractérisé en ce que** l'outil (3) de découpage en morceaux est formé à hauteur des ouvertures (9;31;35) formées dans la paroi latérale.

4. Dispositif selon la revendication 1, **caractérisé en ce que** le tamis (26) est agencé de manière à être réglable de telle sorte qu'on peut régler différents coefficients de traversée.

5. Dispositif selon la revendication 1, **caractérisé en ce qu'**il est prévu un dispositif (5;34) de retenue de filtre, qui reçoit dans son extrémité inférieure le filtre (4;25;26).

6. Dispositif selon la revendication 5, **caractérisé en ce que** sur le côté intérieur de la paroi (6) du récipient font saillie des barrettes (7) servant à s'engager dans des évidements (13) formés dans le dispositif (5;34) de retenue du filtre.

7. Dispositif selon la revendication 1, **caractérisé en ce que** l'outil (3) de découpage en morceaux comporte plusieurs, de préférence quatre, lames (8) et que les lames sont conformées de telle sorte que les forces, qui lors du découpage en morceaux, agissent sur les denrées alimentaires, sont dirigées en direction des ouvertures (9;31;35).

8. Dispositif selon la revendication 7, **caractérisé en ce que** les lames (8) sont coudées différemment et sont réparties sur la périphérie de la broche porte-outil (14).

9. Dispositif selon la revendication 1, **caractérisé en ce que** sur l'outil (3) de découpage en morceaux est prévu un accouplement (15), qui peut être relié au dispositif mené d'un robot de cuisine actionné électriquement.

10. Dispositif selon la revendication 1, **caractérisé en ce que** le filtre (4;25;26) est remplaçable.
